# EUROPEAN PATENT APPLICATION

(11) **EP 2 749 385 A1**
(43) Date of publication of application: **02.07.2014**
(21) Application number: 12397532.8
(22) Date of filing: 28.12.2012
(51) Int. Cl.: B28B 7/00, B32B 27/34, B32B 27/42, B32B 21/08

(54) **A coated plywood**

(71) Applicant: UPM-Kymmene Wood Oy, 15140 Lahti (FI)
(72) Inventor: Kiuru, Jani, 54100 Joutseno (FI); Pöntinen, Tero, 52300 Ristiina (FI); Asikainen, Marjaliisa, 17200 Vääksy (FI); Wiren, Olli, 16730 Kutajärvi (FI)
(74) Representative: Tampereen Patenttitoimisto Oy

(57) **Abstract**

The invention relates to a coated plywood, method for manufacturing a coated plywood and use of a coated plywood as a concrete mould.

According to an embodiment a reusable plywood for a concrete mould comprises a wood-base and a coating. The wood-base comprises veneers attached to each other with a first adhesive (201). The coating comprises a polyamide layer (203) attached to the wood-base with a second adhesive (202), which comprises phenolic resin. The reusable plywood comprises density of less than 650 kg/m³.

## Description

### Field of the Invention

The invention relates to a coated plywood, method for manufacturing a coated plywood and use of a coated plywood.

### Background

Plywood is made of veneers. The veneers are glued to each other. Properties of plywood depend on quality and type of veneers used, and attachment of the veneers, for example.

Properties of a plywood may be improved by different coatings. Depending on use and requirements, used coating may be plastic, paint, lacquer, paper, metal, fabric or rubber, for example.

### Summary

Aim of the present application is to provide a reusable plywood.

According to an embodiment a reusable plywood for a concrete mould comprises a wood-base and a coating, wherein the wood-base comprises veneers attached to each other with a first adhesive. The coating comprises a polyamide layer. The coating is attached to the wood-base with a second adhesive, which comprises phenolic resin. The reusable plywood comprises density of less than 650 kg/m³

According to an embodiment a method for providing a reusable plywood for a concrete mould comprises providing wood-base comprising veneers, which are being attached to each other with a first adhesive. The method further comprises providing a coating comprising polyamide layer. The coating being attached to the wood-base with a second adhesive, which comprises phenolic resin. The reusable wood-base comprises density of less than 650 kg/m³_{.}

According to an embodiment a method for manufacturing a reusable plywood for a concrete mould comprises providing a wood-base comprising veneers attached to each other with a first adhesive. The method further comprises providing a coating comprising polyamide layer, and providing a second adhesive comprising phenolic resin. The embodiment further comprises attaching the polyamide layer to the wood-base with the second adhesive. The reusable plywood comprises density of less than 650 kg/m³,

According to an embodiment a plywood is used as a concrete mould.

### Description of the Drawings

The following figures show embodiments of the invention. The figures are not in scale.
- Figures 1abc: illustrate examples of a construction of a wood-base of a plywood according to an embodiment of the present invention.
- Figure 2: illustrates an example of a coated plywood according to an embodiment of the present invention.
- Figure 3: illustrates an example a plywood according to an embodiment of the present invention.
- Figure 4: illustrates an example of a plywood according to an embodiment of the present invention.
- Figure 5: illustrates an example of a plywood according to an embodiment of the present invention.
- Figure 6: illustrates a method according to an embodiment of the present invention.
- Figure 7: illustrates a manufacturing method according to an embodiment of the present invention.
- Figure 8: illustrates a simplified example on providing veneers for a plywood according to an embodiment of the invention.
- Figure 9: illustrates a simplified example on providing a coating on a plywood according to an embodiment of the invention.
- Figure 10: illustrates a simplified example on attaching a coating on a plywood according to an embodiment of the invention.

### Detailed Description of the Embodiments

In the following some embodiments and examples of the invention are described in further detail with the accompanying figures.

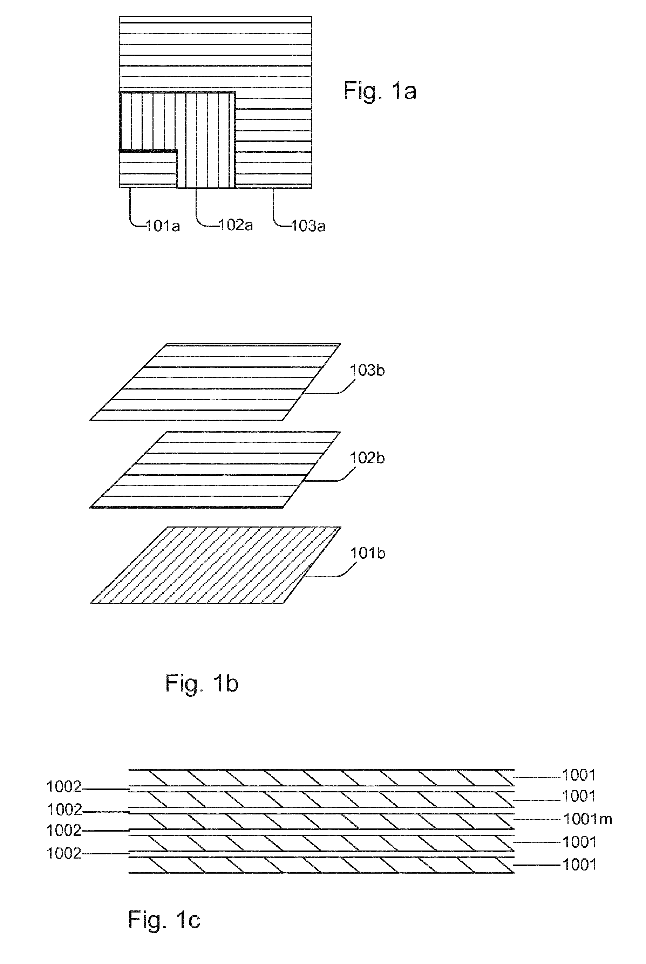

Figure 1a illustrates an example of a plywood according to an embodiment of the present invention. Plywood is made of thin sheets of wood material 101 a, 102a, 103a. Thin sheets of wood material forming the plywood are called veneers. Veneers are made using rotary cutting, for example. Plywood may be made of veneers glued together in order to form a plywood panel. Figure 1a illustrates a construction of plywood, where veneers 101 a, 102a, 103a are cross-bonded. The veneers 101 a, 102a, 103a comprise directional grains. The sheets in figure 1a are aligned so that directional grains of sheet 101a are divergent with directional grains of the sheet 102a attached on top of it. Further directional grains of sheet 102a are divergent with directional grains of the sheet 103a attached on top of it. Next layers of veneer are aligned similarly. This kind of alternating structure, where grain direction of veneers next to each other differ, is called cross-bonded.

Figure 1b illustrates another example embodiment of a plywood, where three veneers 101 b, 102b, 103b are illustrated separately. In construction of Figure 1b the veneer layers 102b and 103b forming the two uppermost veneer layers have directional grains aligned in the same direction. This kind of structure, where typically two topmost veneer layers are aligned in a similar manner, is called a directional construction. The other veneer layers (other than the two topmost veneer layers), for example layer 101 b in Figure 1b, may be cross-bonded in a structure as shown in Figure 1a. Directional construction of Figure 1b may provide strength to the plywood.

Figure 1c illustrates an example embodiment of a plywood. The plywood of Figure 1c comprises two kind of veneers 1001 and 1002. Different kind of veneers are placed alternately in this construction. One type of veneer 1001 is next to the other kind of veneer 1002. A surface of veneer 1001 is always facing a surface of veneer 1002 in Figure 1c. The veneers may comprise different quality, material and/or dimensions, for example. For example veneer layers 1001 may be made of pine and veneer layers 1002 may be made of spruce. Veneer layers 1001 may have different thickness than veneer layers 1002, like shown in Figure 1c. In Figure 1c veneers are glued to each other so that the formed plywood has mirror image structure (of veneers) in relation to its centre line 1001 m. The centre line 1001 m passes through along the veneer layer in the middle of the structure. Plywood construction in Figure 1c comprises certain kind of veneers in certain order on top of the middle veneer layer 1001m, and it comprises the same kind of veneers in the reversed order below the middle veneer layer 1001 m. The construction of Figure 1c forms a mirror image in relation to its centre line 1001 m.

Wood-base of the plywood forms a two-dimensional plane comprising width and length. Two dimensional planes are illustrated for example in Figure 1 a and Figure 1 b. Layers forming the plane structure are shown in Figure 1 b. Figure 1a shows a plywood from above, towards the plane. Figure 1c illustrates a side view of a of a plywood construction, where planes continue toward the paper and thickness can be seen. Thickness of a plane is many times smaller dimension than the width and length of the plane.

Plywood according to at least some embodiments may comprise a wood-base made of veneers, where the veneers have thickness of at least 2 mm. Preferably veneers have thickness of 1,5-5 mm; or up to 6 mm. Most preferably veneers have thickness of 2-4 mm. Thickness of the plywood may be 8-30 mm; preferably 11-22 mm; more preferably 11-13 mm, 14-16 mm, 17-19 mm, or 20-22 mm. Thickness of a plywood is typically established as a nominal thickness. Exact thickness of a plywood may be more or less than the established nominal thickness. The tolerance in both directions may be equal to or less than 1 mm. According to at least some embodiments the plywood comprises density of less than 650 kg/m³; or preferably less than 600 kg/m³; or more preferably less than 550 kg/m³. In at least some embodiments the plywood comprises density of 350-550 kg/m³; or preferably 460-520 kg/m³, measured at relative air humidity of 65%.

Plywood according to embodiments has good load bearing capacity in relation to weight of the plywood. In addition, mass of the plywood is small compared to general plywood mass in view of its dimensions. Low weight is at least partly due to material of veneers. Light weight plywood is easy to handle. For example, mean thickness of plywood made of softwood, poplar or aspen is 18 mm, the corresponding plywood product made of birch and having the same weight, would be 12 mm thick. Such thin plywood of birch would not have resistance to load, but it would break or at least gain unwanted bending when exposed to a stress or a force.

Veneers are typically attached to each other with an adhesive. Glue or adhesive used may be any suitable glue for attaching veneers. For example a liquid resin, or a film impregnated with a resin, wherein the resin comprises a phenolic resin. In an example embodiment the veneers are glued using phenolic resin in a liquid form. A liquid resin may be dried, such that the adhesive of the finished panel may comprise resin, or phenolic resin. Phenolic resin adhesive is usable in exterior use. Typically phenolic resin is not affected by changes in moisture. A phenolic resin persists hard meteorological conditions. The plywood veneers attached with phenolic resin forms at least a part of a weather resistant product for exterior use and storage. It is usable for concrete molding and maintains plywood properties, like dimensions and construction, during concrete molding, despite the neighbouring moisture content. Further gluing with a phenolic resin enables the plywood to be resistant to an alkaline concrete. The attachment of veneers has effect on durability of the plywood. Phenolic resin provides an effect of durable and resistant attachment and/or plywood.

Plywood may be made of birch, poplar, aspen, spruce, pine, or a combination of any of the mentioned. Spruce and pine are called softwood due to their properties. Softwood may be made of spruce or pine or combination of the two. Spruce comprises longer grains than pine. The longer grains of spruce may provide better structural characteristics. Properties of softwood, poplar or aspen, may be preferred depending on the application and environment. The material is not among most expensive ones, thus spruce, pine, poplar and/or aspen may provide cost-effective solution. Properties of plywood made of softwood, poplar or aspen differ for example from plywood made of typically harder wood materials. Softwood, poplar and aspen are typically cheaper, lighter and weaker in relation to their weight than harder wood species, like birch. The plywood comprising spruce, pine, poplar and/or aspen may be selected, when taking into account end use, desired properties, environment of use, associated materials, when in use, costs, materials used with plywood, or tools used during handling, for example. When for example thickness of the plywood board is not an issue, but a bit thicker board is found practical for the use, or where weight of the plywood is an issue for usability, then using plywood made of softwood may be preferred. For example plywood used for framing a mould for a concrete are advantageously relatively low weight, which makes those convenient to handle. Plywood is carried and placed by hand, without separate machines or auxiliary means. Thus low weight or mass has an effect on usability, especially when muscular strength capacity forms limits for use. Despite the relatively low weight, the plywood for concrete mould may be relatively thick (compared to the low weight). Thickness of the plywood makes it easier to handle. Thin edge of the relatively thick plywood puts less weight on user's fingers than a thinner or heavier plywood would. Using relatively thick plywood may have an effect of correspondingly (in relation to the thickness of the plywood) decreasing concentrated load caused on fingers of the user handling the plywood. The relatively thick and relatively low weight plywood effects on usability and user experience when used and/or tooled.

According to at least some embodiments, a wood-base comprises at least one of pine, spruce, poplar and aspen. In some embodiments, at least a surface layer of the plywood is made of the mentioned wood species. According to at least some embodiments, at least a veneer at the surface of the wood-base comprises a density of less than 650 kg/m³; or preferably less than 600 kg/m³; or more preferably less than 560 kg/m³. According to at least some embodiments, at least a veneer at the surface of the wood-base comprises a density of 350-600 kg/m³; or preferably 460-560 kg/m³. The densities are measured at relative air humidity of 65 %. In some embodiments at least surface layers of the plywood comprise pine, spruce, poplar or aspen. According to some/all embodiments the wood-base comprises veneers made of at least one of pine, spruce, poplar and aspen. According to at least some embodiments the plywood comprises at least one of pine, spruce, poplar and aspen at least 50 %; or preferably at least 60 %; or more preferably at least 80 %; or most preferably at least 90 %.

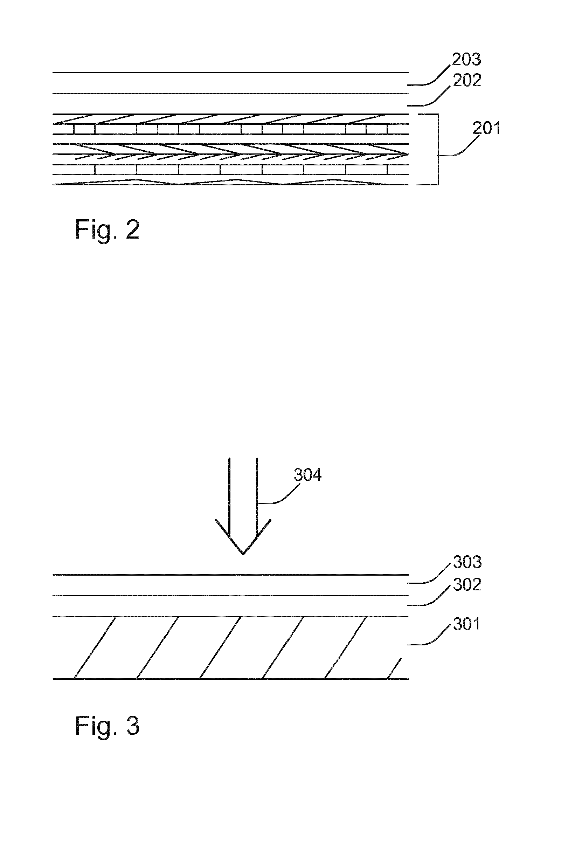

Figure 2 shows an example of a coated plywood according to an embodiment of the present invention. Plywood comprises a wood-base 201 and a coating 202, 203. The wood-base 201 comprises many layers of veneers attached to each other with an adhesive. The veneers comprise at least one of spruce, pine, poplar and aspen. Layers of veneers may have cross-bonded structure or alternatively the two topmost layers may be aligned to have same grain direction. Other structures of plywood may be used according to the embodiments.

Coating of Figure 2 comprises polyamide layer 203 attached to the wood base 201 with an adhesive 202. Polyamide layer 203 may be a pre-prepared ready-made film. The polyamide layer 203 comprises grammage of less than 100 g/m²; or preferably less than 60 g/m²; or most preferably 15 - 60 g/m². In one example the polyamide layer 203 has thickness of 0,02 - 0,1 mm. A grammage may be called a basis weight in some publications. For plastic, or resin materials, corresponding variable may be surface density.

The adhesive 202 of Figure 2 comprises phenolic resin. Phenolic resin is a hot-setting adhesive. The adhesive 202 thus has a non-reactive state, which can be changed to a reactive, adhering state by providing required temperature. Phenolic resin of the adhesive 202 may be absorbed to a carrier. A carrier may be thin and porous structure, and comprise a paper or a film, for example. The adhesive 202 may be in a liquid form. Liquid form may enable the adhesive 202 to be rolled up. The adhesive 202 may comprise an adhesive film impregnated with phenolic resin. The adhesive 202 may be spread out in a liquid form or impregnated into a carrier in a liquid form. According to an embodiments plywood comprising at least one of spruce, pine, poplar and aspen comprises at least some surface roughness and/or fractures and/or microscale openings. The adhesive may have effect of smoothening the surface of the wood-base. The adhesive may be designed to have thickness such that desired homogeneity is achieved on the surface of the wood-base. For example carrier paper having basis weight of 40 grams may positively influence on roughness of the wood-base surface. At least small scale deviations, like scratches or waving of the surface, may be levelled down.

In an example, the reactive adhesive is absorbed into a carrier material in its non-reactive form. The carrier material comprises thin porous paper. The amount of the reactive adhesive used is 120 g/m² in this example. The reactive adhesive comprises 40 g/m² of paper and 80 g/m² of phenolic resin. The reactive adhesive may be placed between the wood-base and the polyamide layer. The polyamide layer in this example is made of a single film having density of 23 g/m². Thus the total density of the coating of the wood-base is 140 g/m² in this example. Thickness of the polyamide film is 0,02 mm.

After the reactive adhesive, the wood-base and the polyamide film are in place, the reactive adhesive is brought to an adhering state by using certain temperature. Phenolic resin reacts at a process temperature. Phenolic resin provides good adhesion of the polyamide film to the wood-base.

Figure 3 shows an example of coating plywood according to an embodiment. Plywood comprises wood-base 301 made of softwood. In addition or alternatively, for example poplar and/or aspen veneers may be used in wood-base 301. A polyamide layer 303 is attachable to the wood-base 301 using an adhesive 302 comprising phenolic resin. The adhesive 302 may be activated, or brought into reactive state, using certain temperature. In one example, wood-base 301 and polyamide layer 303 are attached to each other using a reactive adhesive 302 via hot-pressing 304. The wood-base 301, the adhesive 302 and the polyamide layer 303 may be pressed against each other in a hot-press at a certain pressure between the pressing surfaces. Certain temperature is simultaneously applied for the adhesive 302. Hot-pressing may comprise pressure of 1-2,5 MPa. Hot-pressing may comprise temperature of 110-220 0° C; preferably 120-140 °C; or 185-200 ° C. At least in some implementations temperatures below 110 °C seem to slow down the process too much. According to an example embodiment a pressing stage may last 4-6 minutes at a temperature of 140 °C, and a pressure of 1,5 MPa. In other example, a pressing stage may last less than a minute, for example 35-45 seconds, at a temperature of 200 °C and a pressure of 2.2 MPa. The time of the hot pressing cycle, the used temperature and the used pressure may vary in the embodiments.

In Figure 3 the plywood comprises at least one layer of polyamide 303 and at least one layer of adhesive 302. In an example embodiment, plywood comprises a single polyamide layer and a single adhesive layer. One layer of reactive adhesive for attaching one layer of polyamide layer may have effect of enhancing production of plywood according to at least one/some embodiment(s). Process stages during manufacturing may be minimized due to single layers. Further single layers may provide effectiveness in manufacturing costs, material costs, time, number of phases and device parts. Outer polyamide layer of Figure 3 is non-absorbing to water. Thus it is water-resistant. Polyamide layer has an effect on the surface of the plywood making it bright, translucent and reflecting. Surface of a wood-base may be visible with a coating of Figure 3. One effect of a coated plywood of Figure 3 is providing non-cracking surface. The coating of Figure 3 thus protects the wood-base well from outer conditions, like weather or moist, alkaline concrete.

According to an embodiment, veneers are made via rotary cutting. At least most, alternatively all, veneers are relatively thick, but their density is relatively low. Other ways of forming veneers, like slicing methods, do not put so much stress on the formed veneer. The veneers made by rotary cutting are exposed to cracks or surface damages more than veneers made by slicing, for example. Thus a wood-base formed of the rotary cut veneers typically comprises some unevenness in veneer surface. In addition, the relatively thick veneers comprising relatively low density are vulnerable to tension and forces. Although veneers are glued to each other thereby strengthening the wood-base construction, the wood-base is still vulnerable compared to a wood-base made of hard material, like birch; and/or compared to a wood-base comprising thin material, wherein the wood-base comprises more layers and more glue in between them; and/or compared to a wood-base comprising differently tooled or machined veneers, like sliced or handmade veneers. The surface of the wood-base poses some requirements to the coating in order to provide a reusable concrete mould. A coating comprising a polyamide layer attached to the wood-base with an adhesive comprising a phenolic resin according to embodiments is found to form a reusable surface for a concrete mould. The surface cracking, unevenness and/ damages are minimized, or avoided. Provided plywood comprising an unbroken, continuous surface enables the plywood to be used for a concrete mould. The surface of the plywood prevents water from penetrating to the plywood. The plywood is resistant and durable. The coating according to the embodiments is relatively thin compared to the thickness of the plywood or the wood-base. Density of polyamide is advantageously 1,13-1,02 g/cm², for example. The coating does not introduce lot of weight to the plywood due to thin layer. Thus the usability with relatively low weight plywood is maintained with a plywood comprising wood-based material of most of its thickness. Further, in relation to its weight, the plywood comprises rigid and/or unbending structure. This is a factor enabling utilization as a concrete mould.

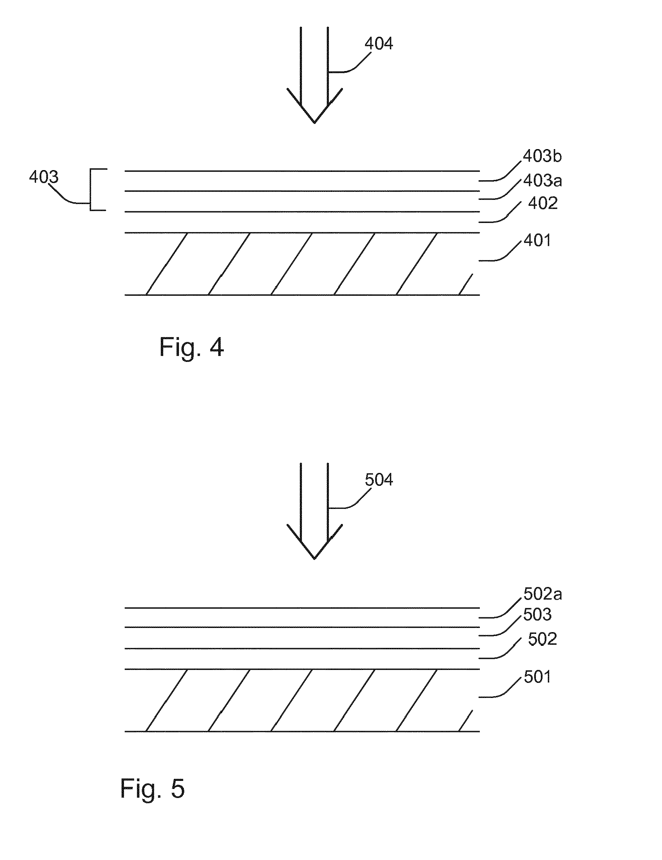

In Figure 4 the plywood comprises a wood-base 401, a layer of adhesive 402, a layer of polyamide 403. In the embodiment of Figure 4, the polyamide layer 403 comprises two layers: a layer 403a and a layer 403b. The lower or inner of the layers 403a comprises polyamide film. The outer layer 403b may comprise any kind of polymer, for example polypropylene and/or polyethylene. All the layers on top of the wood-base 401 may be attached at one process phase, using for example hot-pressing. The polyamide layer 403 may be made by attaching the two components or film layers 403a, 403b using co-extrusion. The films 403a and 403b form a ready-made polymer layer 403 in Figure 4. This may be a pre-prepared two-component polymer layer 403, which is then attachable to a wood-base 401 with an adhesive 402 according to embodiments. In some embodiments number of films may be more than two. Number of films may be designed according to application and requirements within the present scope. Embodiments comprising a polyamide layer comprising at least two films may have effect of providing even further durable plywood. Number of uses and/or life cycle of a plywood may grow. The topmost film may protect the polymer film it covers. This embodiment may further provide an effect of smooth surface plane of the plywood. Degree of irregularity of the surface of the plywood may be downgraded with two or more layers. Embodiments may also have effect of providing strong and stable plywood. The plywood of this embodiment may be suitable for exterior use and/or for hard use and/or for use in demanding environments.

In Figure 5 the plywood comprises a wood-base 501, an adhesive layer 502, a polyamide layer 503 and a second adhesive layer 502a on top of the polyamide layer. The second adhesive layer 502a forms a surface of the plywood of Figure 5. The second adhesive layer 502a may comprise phenolic resin. All the layers on top of the wood-base 501 may be attached at one process phase, using for example hot-pressing. In some applications it is desired to have the adhesive layer 502a as topmost, outer layer of the plywood construction. This may have effect of strengthening the construction of a plywood. The outer surface of Figure 5 absorbs water. The surface is matt and non-slippery. This may have positive effect on usability, transportation and storage, for example. Figure 5 provides low density product, which is easy to use and convenient to handle. The plywood of Figure 5 comprises a coating enabling use in demanding environments.

It is possible to provide a coating on both sides of the plywood wood-base. In one embodiment a plywood comprises a surface and an opposing surface, and the plywood comprises the coating on both the surface and the opposing surface of the plywood. In this example embodiment the same coating is provided on both surfaces of a plywood. This has an effect on usability. If the coating on both sides is the same, then use is straightforward, and the user need not check sides of the plywood during use. Both sides of the plywood may be used similarly. This may even provide more reusability. Numbers of use may be doubled via two-sided coating. By coating two surfaces of the plywood, a mirror structure of a wood-base typically continues to the coatings as well. Mirror structure in relation to a centre layer of a wood-base remains in a final product. Coating both planes of a plywood may provide an effect of providing an even plywood. This may have effect of preventing misalignment or curling. The end product may have stable shape.

In some embodiments, it is possible to provide different coatings to the opposing surfaces of the plywood. In an embodiment a plywood comprises a surface and an opposing surface, and the plywood comprises a coating on the surface of the plywood; and a different coating on the opposing surface of the plywood. For example, one surface of a plywood may comprise a polyamide layer attached to a wood-base with an adhesive layer; and the other surface of the plywood may comprise a polyamide layer attached to a wood-base with an adhesive layer, and a phenolic resin layer as an external surface. In this example, the surface having the phenolic resin layer on top provides uneven surface which may enhance usability. Further the roughness of the surface may be selected among the two surfaces of the plywood according to use. In any embodiment, the polyamide layer may comprise one or more films, as described with Figure 4. The polyamide layer may comprise a two component layer.

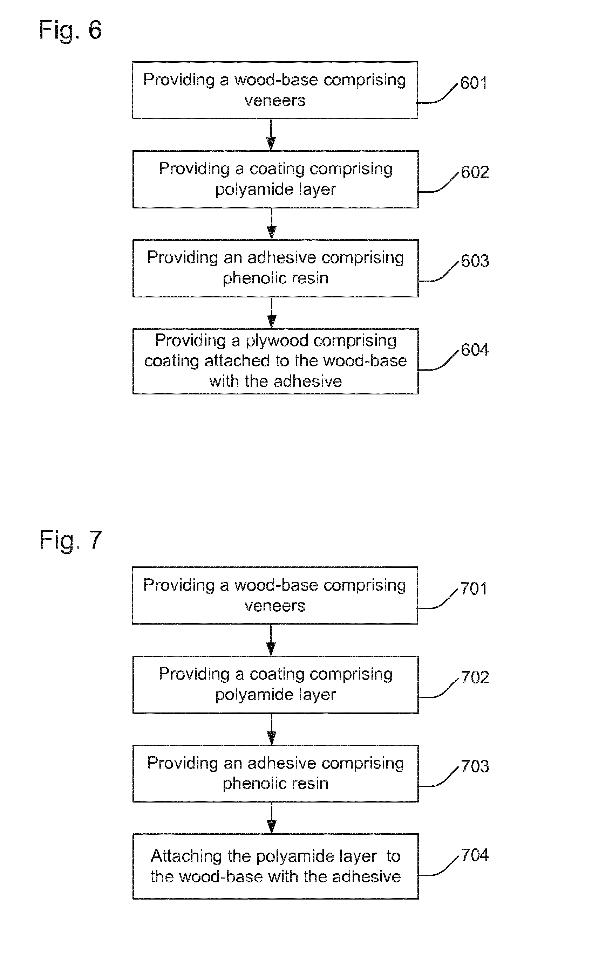

Figure 6 illustrates a method according to an embodiment of the present invention. Method according to the embodiment comprises providing a wood-base 601. Wood-base may comprise veneers made of softwood, aspen and/or poplar, for example. Veneers are glued together with an adhesive in order to form a wood-base for a plywood. Method according to the embodiment comprises providing a coating comprising polyamide layer 602. The polyamide layer may be rolled up and provided in order to provide a plywood. Method according to the embodiment comprises providing an adhesive comprising phenolic resin 603. The adhesive may comprise a carrier impregnated with phenolic resin. The adhesive may be rolled up and provided in order to provide a plywood. Method according to the embodiment comprises providing plywood comprising coating attached to the wood-base with the adhesive 604.

Figure 7 illustrates a manufacturing method according to an embodiment of the present invention. In a manufacturing method of Figure 7 wood-base is provided 701. Wood-base may comprise relatively thick and low weight veneers attached to each other with an adhesive in order to form a base for a plywood. A coating comprising polyamide layer is provided 702. Polyamide layer may comprise one of more films. The polyamide layer may be provided as a sheet, as a ready pre-made film, and/or from a roll, for example. An adhesive comprising phenolic resin is provided 703. The adhesive may be provided in a liquid form, or as a sheet, or as a ready pre-made film; and/or from a roll, for example. Manufacturing method of figure 7 further comprises attaching the polyamide layer to the wood-base with the adhesive. The method of figure 7 may comprise spreading adhesive comprising an adhesive film impregnated with phenolic resin between the coating and the wood-base. According to an embodiment, the method of Figure 7 may comprise wounding polyamide layer and adhesive from a roll in order to form a layers on top of the wood-base. The polyamide layer may be attached to the wood-base with an adhesive layer using hot-pressing. According to an example embodiment manufacturing method comprises attaching coating on both sides of the wood-base.

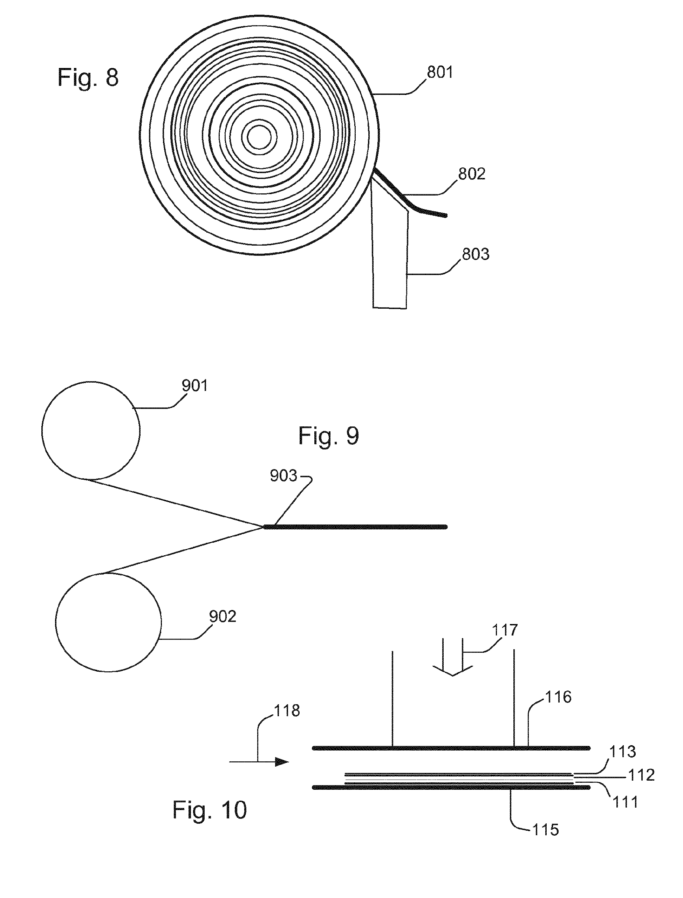

Figure 8 illustrates a simplified example on providing veneers for a plywood according to an embodiment of the invention. In this embodiment veneer is rotary cut. A cutting knife 803 is set towards a preformed or intermediate wood product 801. Cutting knife 803 is broad and elongates along the wood product 801. A cutting edge of the knife 803 cuts out veneer 802 of certain thickness. Angle of the cutting knife 803 can be adjusted in order to determine thickness of the veneer 802. Often more thickness gives rise to cracks in the veneer. Plywood made of relatively thick veneers may comprise more cracks or unevenness or openings than a plywood made of thin veneers. During rotary cutting, it is possible that the other side of the veneer is stretched during cutting. The veneer material of the wood-base is not always of equal quality. According to embodiments, unevenness of a wood-base may be compensated with the used coating.

It is possible to provide veneers using other techniques, like machining, cutting and sawing. Slicing of veneer may be accomplished in different directions in relation to the directional grain of the wood product, for example plain, half-round, lengthwise or quarter. The veneers according to embodiments are effective to manufacture due to their desired thickness. Veneers according to the embodiments may be manufactured in any known manner. In an embodiment at least most, alternatively all, the veneers of the wood-base comprise density of less than 650 kg/m³. The at least most/all veneers may comprise density of less than 600 kg/m³; or preferably less than 550 kg/m³; or more preferably 350-600 kg/m³; or most preferably 460-560 kg/m³. According to some embodiments at least veneers at the surface layer(s) of the wood-base comprise the density defined in previous.

Figure 9 illustrates a simplified example on providing a coating on a plywood according to an embodiment of the invention. In this example a roll of polyamide layer 901 and a roll of adhesive 902 is provided. Rolls of coating 901 and adhesive 902 may be unwind such that those face each other 903. The parallel polyamide layer 901 and adhesive 902 may form adjacent layers next to each other 903. The polyamide layer 901 and the adhesive 902 may be brought in contact with each other 903. Example of Figure 9 may enhance process and manufacturing due to the rolled polyamide layer 901 and adhesive 902. Similar rolls can be rolled out at simultaneously at the same process phase. Further, only two rolls are needed. In an embodiment, which comprises two layers of adhesive 902, placed on both sides of the polyamide layer 901 , when parallel at phase 903, a third unwindable roll of adhesive 902 may exist. After the layers are on top of each other, next stage is attaching in order to form a plywood according to embodiments. Attaching can be done on-line, after coating and adhesive are facing each other, as in Figure 9. It is possible to do attaching off-line, at a separate place after Figure 9.

Figure 10 illustrates a simplified example on attaching a coating on a plywood according to an embodiment of the invention. Attaching may be done by hot-pressing. Plywood comprises a wood-base 111, an adhesive 112, which is used for attaching a coating 113 comprising a polyamide layer to the wood-base 111. The adhesive 112 and the coating 113 may be unwind from rolls as shown in the embodiment of Figure 9. Alternatively liquid adhesive 112 may be spread on a wood-base 111 or on a coating 113. After rolled out as shown in Figure 9, the adhesive and the coating 903 may be placed on a wood-base of a plywood. Figure 10 shows a bottom layer 115 for receiving an unattached plywood layers 111, 112, 113. The bottom layer 115 has a counter layer 116. Typically bottom layer 115 and its counter layer have similar dimensions, or at least approximately similar sized surfaces facing each other. Pressure 117 is applied to the system. The bottom layer 115 and its counter layer 116 are pushed towards each other so that pressure is generated in-between them. Pressure 117 is used to attach the plywood layers 111, 112, 113 to each other. Certain temperature 118 is applied to the system. Temperature 118 may be created by blowing hot air to a system. Alternatively or additionally the bottom layer 115 and its counter layer 116 may be warmed up to a certain temperature. Other alternative or additional may be used in order to implement hot-pressing.

An adhesive used in any of the embodiments may comprise a reactive adhesive. The adhesive may be reactive to the temperature, pressure, or both, for example. A reactive adhesive may have a non-active state. The reactive adhesive may be brought to an active state during adhesion phase, or for attaching, or when the adhesion is desired. The change of state from non-active to active may be implemented by applying certain temperature and/or certain press. This may be implemented for example in hot-pressing stage.

According to at least some embodiments wood-base of a plywood may comprise branch points, cracks, open joints, bark points, pitch holes, colour defects, or roughness. For example, joints between two veneers in a surface may have a small opening or junction between them. The bonding may not be perfect. For example, some micro cracks may be generated to veneers during machining, sawing or rotary cutting. According to at least some embodiments, the applied polyamide and adhesive compensate defects in a wood-base. Thus requirements of a wood-base quality may be relatively low according to at least some embodiments.

Due to grain construction of veneers, the plywood may have some wave-like uneven surface. The coated surface is not porous, but rather impermeable to water. The surface of polyamide is bright. This may enhance cleaning, and thus reusability and number of utilization.

A plywood comprising a wood-base and a polyamide layer attached to the wood-base with an adhesive comprising phenolic resin may be used in concrete moulds. The plywood is usable outside. Attachment and possible gluing are weather durable and boiling durable. One effect achieved with the plywood is that it is impermeable to water. This is one factor enabling the use in concrete moulds. Other effect of the plywood is reusability. Number of uses for a reusable plywood according to embodiments may be tens, or 10-50, or at least 5-15. The formed coating provides a smooth and durable surface for the plywood. The surface is easy to clean after use. Veneers of softwood, poplar or aspen are light weight, which makes use of the plywood handy and easy. Relatively low weigh, compared to other wood-base materials, for example, takes some burden off from other equipment during use, transportation, storage, maintenance, processing and handling. The plywood according to embodiment(s) can be processed, formed and fixed using normal timberwork tools. No special tools are required.

Plywood of the embodiments is light weight, but still strong in view of the weight. Plywood in at least some embodiments is rigid and unbending. The plywood dimensions are stable. A breaking point can be measured, but to a certain level the dimensions are stable. This enables certain uses, for example in the walls of moulds for casting concrete.

One effect of at least some embodiments is low production costs. This is partly due to choosing starting materials. Further, manufacturing process is simplified, and for example no pre-treatment is required for the surface before coating. The coating may enhance surface properties. For example wood-base with coating sustains bending and loads much better than wood-base without the coating. Two-sided coating may provide stable plywood. Further both sides are usable, for example for concrete mould, thus number of reuses may be doubled. Alternatively, different coatings on the opposing surfaces of the plywood provide opportunity to select the used surface according to use, application and/or environment.

## Claims

1. A reusable plywood for a concrete mould comprising a wood-base and a coating;
wherein the wood-base comprises veneers attached to each other with a first adhesive; and the coating comprises a polyamide layer attached to a surface of the wood-base with a second adhesive, which comprises phenolic resin; wherein the reusable plywood comprises density of less than 650 kg/m³.

2. A plywood according to claim 1, wherein the reusable plywood comprises density of less than 600 kg/m³; or preferably less than 550 kg/m³; or more preferably 350-550 kg/m³; or most preferably 460-520 kg/m³.

3. A plywood according to any of previous claims, wherein the wood-base comprises veneer layers having thickness of at least 2 mm; or preferably 1,5-5 mm; or most preferably 2-4 mm.

4. A plywood according to any of previous claims, wherein at least a veneer at the surface of the wood-base comprises density of less than 650 kg/m³; or preferably less than 550 kg/m³; or more preferably less than 560 kg/m³.

5. A plywood according to any of previous claims,
- wherein the wood-base comprises at least one of pine, spruce, poplar and aspen; and/or
- wherein the wood-base comprises the veneers made of at least one of pine, spruce, poplar and aspen; and/or
- wherein the wood-base comprises at least one of pine, spruce, poplar and aspen at least 50 %; or preferably at least 60 %; or more preferably at least 80 %; or most preferably at least 90 %.

6. A plywood according to any of previous claims, wherein the adhesive comprises a carrier film impregnated with phenolic resin.

7. A plywood according to any of previous claims, wherein the polyamide film has grammage of less than 100 g/m²; or preferably less than 60 g/m²; or most preferably 15-60 g/m².

8. A plywood according to any of previous claims, wherein the polyamide layer comprises a polyamide film.

9. A plywood according to any of previous claims, further comprising a second coating layer on an external surface of the plywood attached to the polyamide layer; wherein the second coating layer optionally comprises phenolic resin.

10. A plywood according to any of previous claims, wherein the polyamide layer is attached to the surface of the wood-base with the second adhesive layer using hot-pressing.

11. A plywood according to any of previous claims, wherein the wood-base comprises the surface and an opposing surface, and the plywood comprises the coating on both the surface and the opposing surface of the wood-base.

12. A plywood according to any of previous claims, wherein the wood-base comprises the surface and an opposing surface, and the plywood comprises the coating on the surface of the wood-base; and a different coating on the opposing surface of the wood-base.

13. Method for manufacturing a reusable plywood for a concrete mould, wherein the reusable plywood comprises density of less than 650 kg/m³, the method comprising
- providing a wood-base comprising veneers attached to each other with a first adhesive,
- providing a coating comprising a polyamide layer,
- providing a second adhesive comprising phenolic resin, and
- attaching the polyamide layer to a surface of the wood-base with the adhesive.

14. Method according to claim 13, wherein providing a wood-base comprises providing veneers for the wood-base by rotary cutting.

15. Method according to any of previous claims 13-14, comprising spreading the adhesive between the coating and the wood-base, wherein the adhesive comprises a carrier film impregnated with phenolic resin.

16. Method according to any of previous claims 13-15, comprising attaching the polyamide film to the wood-base with a reactive adhesive layer using hot-pressing.

17. Method according to any of previous claims 13-16, wherein the wood-base comprises the surface and an opposing surface, the method comprising attaching a coating on the surface and the opposing surface of the wood-base; the method optionally further comprising attaching the same coating on the surface of the wood-base and on the opposing surface of the wood-base; or attaching the coating on the surface of the wood-base and attaching a different coating on the opposing surface of the wood-base.

18. Use of a plywood according to any of claims 1-12, as a concrete mould, wherein the coating is usable in contact with concrete.
